# EUROPÄISCHE PATENTSCHRIFT

(11) **EP 4 128 401 B1**
(45) Veröffentlichungstag und Bekanntmachung des Hinweises auf die Patenterteilung: **14.02.2024**
(21) Anmeldenummer: 21716148.8
(22) Anmeldetag: 29.03.2021
(51) Int. Cl.: H01M 8/0258, H01M 8/0267, H01M 8/1018, H01M 8/10

(54) **BIPOLARPLATTE FÜR EINE ELEKTROCHEMISCHE VORRICHTUNG**
BIPOLAR PLATE FOR AN ELECTROCHEMICAL DEVICE
PLAQUE BIPOLAIRE POUR UN DISPOSITIF ÉLECTROCHIMIQUE

(30) Priorität: 31.03.2020 DE 102020108945
(43) Veröffentlichungstag der Anmeldung: 08.02.2023
(73) Patentinhaber: EKPO Fuel Cell Technologies GmbH, 72581 Dettingen/Erms (DE)
(72) Erfinder: KRAFT, Jürgen, 72555 Metzingen (DE); GÖTZ, Michael, 72581 Dettingen/Erms (DE); MORCOS, Manuel, 72076 Tübingen (DE)
(74) Vertreter: Hoeger, Stellrecht & Partner Patentanwälte mbB
(86) Internationale Anmeldenummer: PCT/EP2021/058181
(87) Internationale Veröffentlichungsnummer: WO 2021/198192

(56) Entgegenhaltungen:
- DE-A1-102006 056 468
- US-A1- 2010 136 452

## Beschreibung

Die vorliegende Erfindung betrifft eine Bipolarplatte für eine elektrochemische Vorrichtung, die mindestens eine erste Bipolarplattenlage und eine zweite Bipolarplattenlage, zwischen denen ein sich längs einer Längsrichtung erstreckender Randkanal ausgebildet ist, und einen im Wesentlichen parallel zu dem Randkanal verlaufenden Fluidkanal umfasst.

Wenn eine solche Bipolarplatte mit einer Strömungspforte versehen ist, durch welche ein fluides Reaktionsmedium in ein an der Bipolarplatte ausgebildetes Strömungsfeld einströmt, so wird der Randkanal nicht von einem fluiden Medium durchströmt, da eine Schweißnaht um den Bereich der Strömungspforte den Randkanal von der Medienzuströmung abtrennt.

Die DE 10 2006 056468 A1 offenbart eine Bipolarplatte für eine elektrochemische Vorrichtung gemäß dem Oberbegriff von Anspruch 1.

Die US 2010/136452 A1 offenbart eine Bipolarplatte für eine elektrochemische Vorrichtung, die Fluidkanäle umfasst, welche parallel zueinander verlaufen und durch eine Fluidverbindung miteinander verbunden sind, durch welche ein fluides Medium aus dem einen Fluidkanal in einen benachbarten Fluidkanal strömen kann.

Der vorliegenden Erfindung liegt die Aufgabe zugrunde, eine Bipolarplatte der eingangs genannten Art zu schaffen, bei welcher zumindest ein Randkanalabschnitt des Randkanals mit einem der elektrochemischen Vorrichtung zuzuführenden fluiden Medium durchströmbar ist, beispielsweise mit einem fluiden Reaktionsmedium oder mit einem Kühlmedium, obwohl der Randkanal keine direkte Fluidverbindung zu einem Mediumkanal aufweist, durch welchen das betreffende fluide Medium der elektrochemischen Vorrichtung zugeführt wird.

Diese Aufgabe wird durch eine Bipolarplatte nach Anspruch 1 gelöst.

Der vorliegenden Erfindung liegt das Konzept zugrunde, eine Fluidverbindung zu einem von der Medienzufuhr abgetrennten Randkanalabschnitt zur Verfügung zu stellen, um den Randkanalabschnitt gezielt zur Verteilung eines fluiden Mediums im Innenraum der Bipolarplatte und/oder in den an der Außenseite der Bipolarplatte ausgebildeten Strömungsfeldern nutzen zu können.

Um die Strömung des den Randkanal durchströmenden fluiden Mediums zu den elektrochemisch aktiven Bereichen einer der Bipolarplatte benachbarten elektrochemisch aktiven Einheit gezielt einstellen zu können, ist vorgesehen, dass der Randkanal mit einer oder mehreren Verengungen und/oder mit einer oder mit mehreren Unterbrechungen versehen ist.

Bei einer besonderen Ausgestaltung der Erfindung ist vorgesehen, dass der Fluidkanal gegenüber einer elektrochemisch aktiven Einheit der elektrochemischen Vorrichtung geschlossen ausgebildet ist.

In diesem Fall ist der Randkanal vorzugsweise im Betrieb der elektrochemischen Vorrichtung von einem Kühlmedium durchströmbar.

Die Fluidverbindung umfasst vorzugsweise einen Verbindungskanal, der durch die erste Bipolarplattenlage und die zweite Bipolarplattenlage begrenzt ist, wobei die erste Bipolarplattenlage und die zweite Bipolarplattenlage im Bereich des Verbindungskanals längs einer Stapelrichtung der elektrochemischen Vorrichtung, längs welcher die Bipolarplatten und die elektrochemisch aktiven Einheiten der elektrochemischen Vorrichtung aufeinander folgen, voneinander beabstandet sind.

Ein solcher Verbindungskanal verläuft vorzugsweise quer, insbesondere im Wesentlichen senkrecht, zu der Längsrichtung des Randkanals.

Der Randkanal weist eine Verengung und/oder eine Unterbrechung auf, durch welche der im Betrieb der elektrochemischen Vorrichtung durch die Fluidverbindung aus dem Randkanal in den Fluidkanal austretende Anteil des den Randkanal durchströmenden fluiden Mediums vergrößert wird. Durch eine solche Verengung und/oder Unterbrechung des Randkanals kann die Verteilung der Strömung des fluiden Mediums auf den Randkanal einerseits und auf den benachbarten Fluidkanal andererseits in gewünschter Weise eingestellt werden.

Vorzugsweise ist die Ausdehnung einer solchen Verengung und/oder Unterbrechung in der Längsrichtung des Randkanals so kurz, dass die mechanische Abstützung einer Gasdiffusionslage der elektrochemisch aktiven Einheit der elektrochemischen Vorrichtung an der Bipolarplatte durch die Verengung beziehungsweise Unterbrechung nicht beeinträchtigt wird.

Bei einer anderen besonderen Ausgestaltung der Erfindung ist vorgesehen, dass der Fluidkanal gegenüber einer elektrochemisch aktiven Einheit der elektrochemischen Vorrichtung offen ausgebildet ist.

In diesem Fall ist vorzugsweise vorgesehen, dass der Randkanal im Betrieb der elektrochemischen Vorrichtung von einem fluiden Reaktionsmedium durchströmbar ist.

Ein solches fluides Reaktionsmedium enthält mindestens eine elektrochemisch aktive Spezies, die an den elektrochemischen Reaktionen teilnimmt, welche in der der Bipolarplatte benachbarten elektrochemisch aktiven Einheit stattfinden.

Das fluide Reaktionsmedium, von welchem der Randkanal durchströmbar ist, kann insbesondere ein Anodengas oder ein Kathodengas der elektrochemischen Vorrichtung sein.

Die Fluidverbindung kann beispielsweise mindestens eine Durchtrittsöffnung umfassen, die in einer Begrenzungswand des Randkanals angeordnet ist.

Dabei kann insbesondere vorgesehen sein, dass die Durchtrittsöffnung zumindest teilweise an einer Kuppe und/oder zumindest teilweise an einer Flanke eines Randsteges der ersten Bipolarplattenlage oder der zweiten Bipolarplattenlage angeordnet ist.

Der Randkanal wird vorzugsweise von einem Randsteg der ersten Bipolarplattenlage und von einem Randsteg der zweiten Bipolarplattenlage begrenzt.

Die erfindungsgemäße Bipolarplatte eignet sich insbesondere zur Verwendung in einer elektrochemischen Vorrichtung, welche mindestens eine elektrochemisch aktive Einheit und mindestens eine erfindungsgemäße Bipolarplatte umfasst. Dabei ist die elektrochemisch aktive Einheit vorzugsweise benachbart zu der Bipolarplatte angeordnet.

Insbesondere weist die Bipolarplatte vorzugsweise ein Strömungsfeld auf, welches Strömungsfeldkanäle umfasst, die zu der elektrochemisch aktiven Einheit hin offen sind. Hierdurch ist es möglich, dass ein fluides Reaktionsmedium aus dem betreffenden Strömungsfeld zu der elektrochemisch aktiven Einheit gelangt.

Eine Durchtrittsöffnung in einem Randsteg, welcher den Randkanal der Bipolarplatte begrenzt, wird vorzugsweise durch einen Schneidvorgang, insbesondere einen Laser-Schneidvorgang, an der Bipolarplatte, insbesondere an der ersten Bipolarplattenlage oder an der zweiten Bipolarplattenlage, erzeugt.

Die elektrochemische Vorrichtung kann insbesondere als eine Brennstoffzellenvorrichtung, vorzugsweise als eine PEM(Polymer-Elektrolyt-Membran)-Brennstoffzellenvorrichtung, als eine Elektrolysezelle oder als eine Redox-Flow-Batterie ausgebildet sein.

Die elektrochemisch aktive Einheit der elektrochemischen Vorrichtung umfasst vorzugsweise eine Polymer-Elektrolyt-Membran (PEM).

Die erste Bipolarplattenlage und/oder die zweite Bipolarplattenlage der Bipolarplatte sind vorzugsweise aus einem metallischen Material gebildet.

Weitere Merkmale und Vorteile der Erfindung sind Gegenstand der nachfolgenden Beschreibung und der zeichnerischen Darstellung von Ausführungsbeispielen.

In den Zeichnungen zeigen:

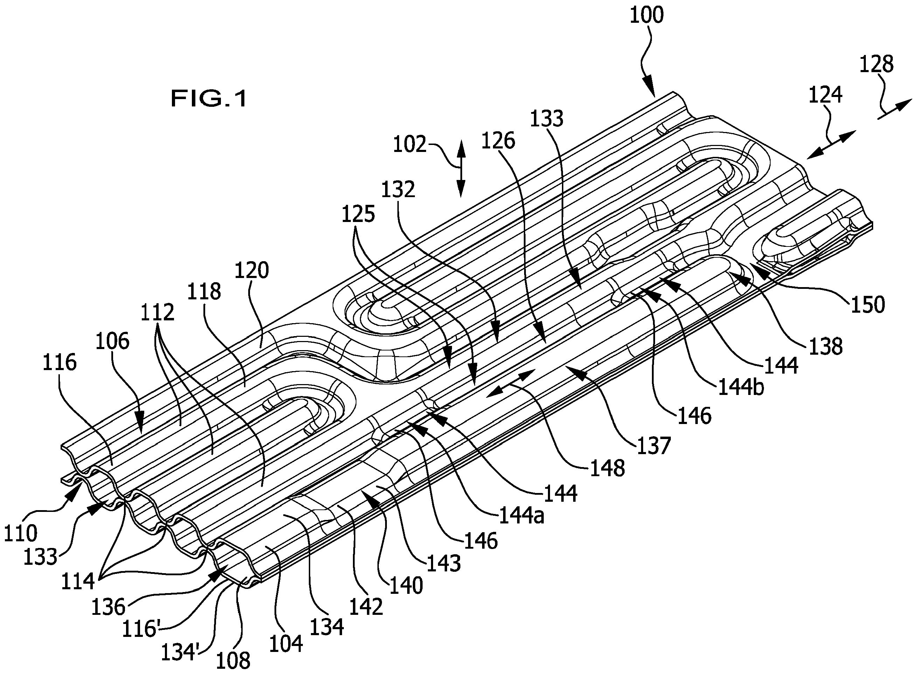

- Fig. 1: eine ausschnittsweise perspektivische Darstellung einer erfindungsgemäßen Bipolarplatte für eine elektrochemische Vorrichtung, welche eine erste Bipolarplattenlage und eine zweite Bipolarplattenlage umfasst, zwischen denen ein sich längs einer Längsrichtung erstreckender Randkanal ausgebildet ist, und einen im Wesentlichen parallel zu dem Randkanal verlaufenden Fluidkanal umfasst, wobei die Bipolarplatte eine Fluidverbindung umfasst, durch welche ein fluides Medium aus dem Randkanal in den benachbarten Fluidkanal und/oder aus dem benachbarten Fluidkanal in den Randkanal ausströmen kann, und wobei der Fluidkanal gegenüber einer elektrochemisch aktiven Einheit der elektrochemischen Vorrichtung geschlossen ausgebildet ist;
- Fig. 2: eine ausschnittsweise Draufsicht auf die Bipolarplatte aus Fig. 1;
- Fig. 3: einen Längsschnitt durch die Bipolarplatte aus den Fig. 1 und 2, längs der Linie 3 - 3 in Fig. 2;
- Fig. 4: einen Querschnitt durch die Bipolarplatte aus den Fig. 1 bis 3, längs der Linie 4 - 4 in Fig. 2;
- Fig. 5: einen Längsschnitt durch die Bipolarplatte aus den Fig. 1 bis 4, längs der Linie 5 - 5 in Fig. 2;
- Fig. 6: einen Querschnitt durch die Bipolarplatte aus den Fig. 1 bis 5, längs der Linie 6 - 6 in Fig. 2,

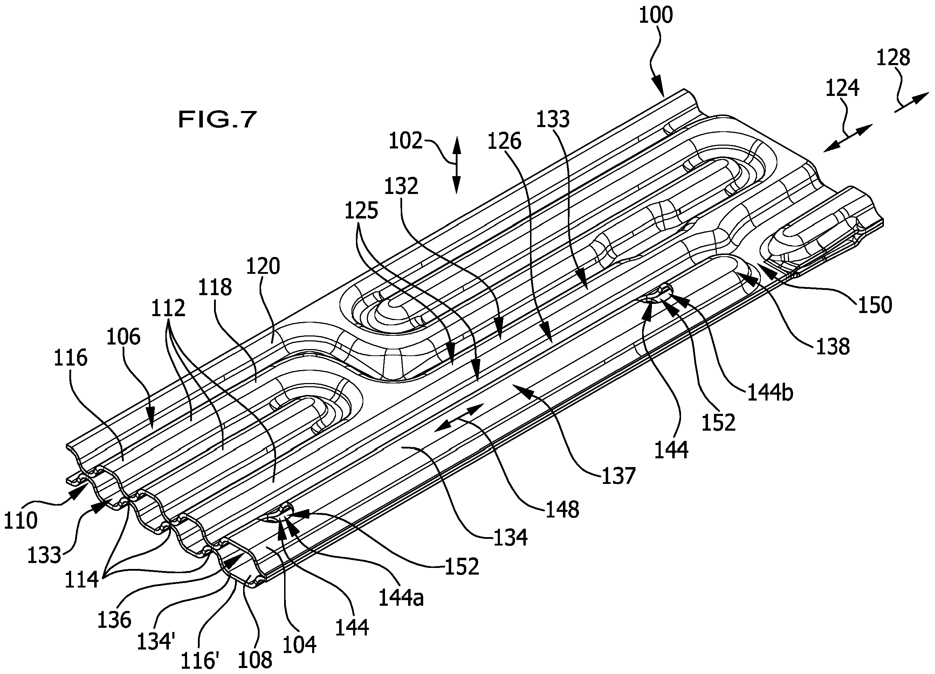

- Fig. 7: eine ausschnittsweise perspektivische Darstellung einer nicht erfindungsgemäßen zweiten Ausführungsform einer Bipolarplatte für eine elektrochemische Vorrichtung, welche eine erste Bipolarplattenlage und eine zweite Bipolarplattenlage umfasst, zwischen denen ein sich längs einer Längsrichtung erstreckender Randkanal ausgebildet ist, und einen im Wesentlichen parallel zu dem Randkanal verlaufenden Fluidkanal umfasst, wobei die Bipolarplatte eine Fluidverbindung umfasst, durch welche ein fluides Medium aus dem Randkanal in den benachbarten Fluidkanal und/oder aus dem benachbarten Fluidkanal in den Randkanal ausströmen kann, und wobei der Fluidkanal gegenüber einer elektrochemisch aktiven Einheit der elektrochemischen Vorrichtung offen ausgebildet ist und Durchtrittsöffnungen an einer Kuppe und/oder an einer Flanke eines Randsteges einer der Bipolarplattenlagen angeordnet sind;
- Fig. 8: eine ausschnittsweise Draufsicht auf die Bipolarplatte aus Fig. 7;
- Fig. 9: einen Querschnitt durch die Bipolarplatte aus den Fig. 7 und 8, längs der Linie 9 - 9 in Fig. 8; und
- Fig. 10: einen Querschnitt durch die Bipolarplatte aus den Fig. 7 bis 9, längs der Linie 10 - 10 in Fig. 8.

Gleiche oder funktional äquivalente Elemente sind in allen Figuren mit denselben Bezugszeichen bezeichnet.

Eine in den Fig. 1 bis 7 ausschnittsweise dargestellte, als Ganzes mit 100 bezeichnete Bipolarplatte dient als Bestandteil für eine elektrochemische Einheit einer (nicht als Ganzes dargestellten) elektrochemischen Vorrichtung, beispielsweise eines Brennstoffzellenstapels oder eines Elektrolyseurs, wobei die elektrochemische Vorrichtung einen Stapel umfasst, welcher mehrere in einer Stapelrichtung 102 aufeinanderfolgende elektrochemische Einheiten, beispielsweise Brennstoffzelleneinheiten oder Elektrolyseeinheiten, und eine (nicht dargestellte) Spannvorrichtung zum Beaufschlagen der elektrochemischen Einheiten mit einer parallel zu der Stapelrichtung 102 gerichteten Spannkraft umfasst.

Die Bipolarplatte 100 umfasst bei dieser Ausführungsform eine erste Bipolarplattenlage 104, an welcher ein erstes Strömungsfeld 106 für ein erstes fluides Reaktionsmedium ausgebildet ist, und eine zweite Bipolarplattenlage 108, die fluiddicht, beispielsweise durch eine Schweißnahtanordnung, an der ersten Bipolarplattenlage 104 festgelegt ist und an welcher ein zweites Strömungsfeld 110 für ein zweites fluides Reaktionsmedium ausgebildet ist.

Die erste Bipolarplattenlage 104 weist Stege 112 und zwischen jeweils zwei Stegen 112 liegende Kanalgrundabschnitte 114 auf.

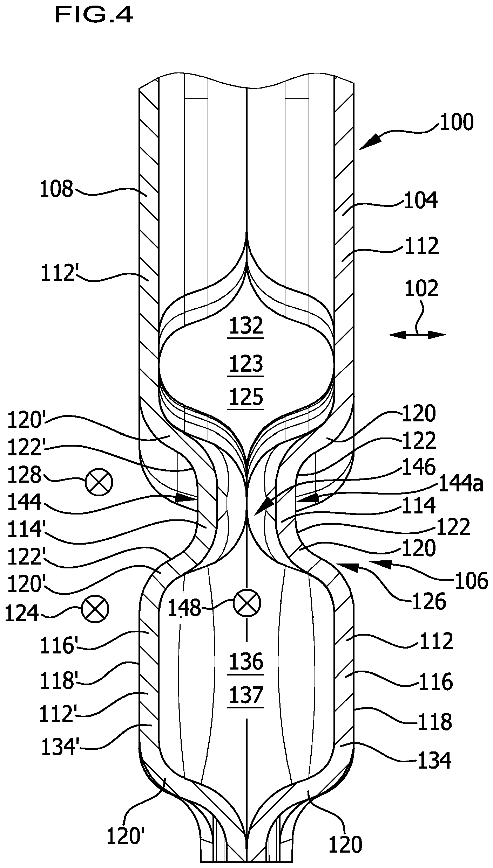

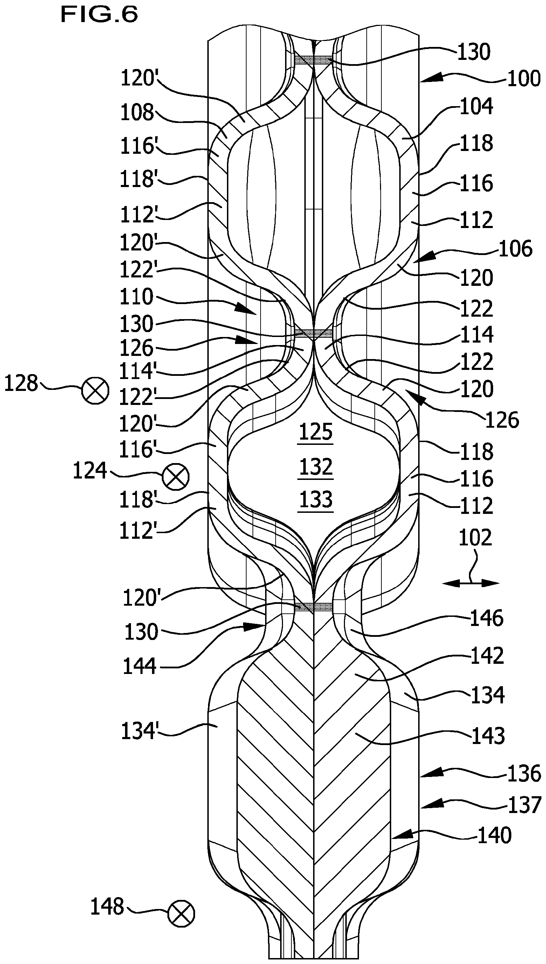

Wie am besten aus den Querschnitten der Fig. 4 und 6 zu ersehen ist, weist jeder der Stege 112 jeweils eine Kuppe 116 auf, mit welcher der betreffende Steg 112 im montierten Zustand der elektrochemischen Vorrichtung an einer der Bipolarplatte 100 benachbarten elektrochemisch aktiven Einheit der elektrochemischen Vorrichtung anliegt.

Eine solche elektrochemisch aktive Einheit kann insbesondere als eine Membran-Elektroden-Anordnung (MEA) ausgebildet sein.

Dabei liegt jede Kuppe 116 mit einer Anlagefläche 118, welche im Wesentlichen senkrecht zur Stapelrichtung 102 ausgerichtet ist, im Wesentlichen flächig an einer der Bipolarplatte 100 zugewandten Begrenzungsfläche der elektrochemisch aktiven Einheit, welche ebenfalls im Wesentlichen senkrecht zur Stapelrichtung 102 ausgerichtet ist, an.

Ferner umfasst jeder Steg 112 zwei Flanken 120, welche gegenüber der Stapelrichtung 102 um einen spitzen Winkel geneigt sind.

Zwischen den der jeweiligen Kuppe 116 abgewandten äußeren Rändern 122 von zwei einander benachbarten Stegen 112 erstreckt sich jeweils ein Kanalgrundabschnitt 114 der ersten Bipolarplattenlage 104, welcher die beiden einander benachbarten Stege 112 miteinander verbindet.

Jeder der Stege 112 erstreckt sich längs einer Steglängsrichtung 124, welche im Wesentlichen senkrecht zu der Stapelrichtung 102 ausgerichtet ist.

Wie am besten aus den Fig. 4 und 6 zu ersehen ist, begrenzen zwei einander benachbarte Stege 112 und der die beiden Stege 112 miteinander verbindende Kanalgrundabschnitt 114 zusammen mit der (nicht dargestellten) elektrochemisch aktiven Einheit jeweils einen Fluidkanal 125, der ein Strömungsfeldkanal 126 des ersten Strömungsfelds 106 ist.

Jeder Strömungsfeldkanal 126 des Strömungsfeldes 106 ist von dem ersten fluiden Reaktionsmedium, welchem das erste Strömungsfeld 106 zugeordnet ist, längs einer Strömungsrichtung 128 durchströmbar, welche innerhalb eines Strömungsfeldkanals 126 im Wesentlichen parallel zu den Steg-Längsrichtungen 124 der den betreffenden Strömungsfeldkanal 126 begrenzenden Stege 112 des ersten Strömungsfelds 106 ausgerichtet ist.

Die Strömungsfeldkanäle 126 des ersten Strömungsfelds 106 münden an ihrem (nicht dargestellten) stromaufwärts liegenden Ende in einem Medium-Zuführbereich des ersten Strömungsfeldes 106 und an ihrem stromabwärts liegenden Ende in einem Medium-Abführbereich des ersten Strömungsfeldes 106.

Im Betrieb der elektrochemischen Vorrichtung tritt das erste fluide Reaktionsmedium, welchem das erste Strömungsfeld 106 zugeordnet ist, durch einen (vorzugsweise im Wesentlichen parallel zur Stapelrichtung 102 verlaufenden, nicht dargestellten) Medium-Zuführkanal in den Medium-Zuführbereich des ersten Strömungsfeldes 106 ein, von wo es auf die verschiedenen Strömungsfeldkanäle 126 des ersten Strömungsfeldes 106 verteilt wird und dieselben längs der Strömungsrichtung 128 durchströmt.

Das erste fluide Reaktionsmedium kann insbesondere ein Anodengas oder ein Kathodengas für die elektrochemische Vorrichtung sein.

Das erste fluide Reaktionsmedium gelangt aus den Strömungsfeldkanälen 126 zu der elektrochemisch aktiven Einheit, wo die jeweils elektrochemisch aktive Spezies aus dem ersten fluiden Reaktionsmedium im Zuge der in der elektrochemisch aktiven Einheit ablaufenden elektrochemischen Reaktionen verbraucht wird, so dass die Konzentration der elektrochemisch aktiven Spezies in dem die Strömungsfeldkanäle 126 durchströmenden ersten fluiden Reaktionsmedium längs der Strömungsrichtung 128 abnimmt.

Die erste Bipolarplattenlage 104 und die zweite Bipolarplattenlage 108 sind längs einer oder mehrerer Fügelinien 130 fluiddicht miteinander verbunden.

Grundsätzlich kommt jedes stoffschlüssige Fügeverfahren für die Herstellung der mindestens einen Fügelinie 130 in Betracht.

Insbesondere kann vorgesehen sein, dass die Fügelinie 130 eine Lötlinie, eine Schweißlinie oder eine Klebelinie ist oder durch einen Wulst eines, vorzugsweise elastomeren, Dichtungsmaterials gebildet ist.

Eine Fügelinie 130 kann insbesondere durch einen Laserschweißvorgang an der Bipolarplatte 100 erzeugt sein.

Zwischen der ersten Bipolarplattenlage 104 und der zweiten Bipolarplattenlage 108 sind geschlossene Fluidkanäle 132 für ein weiteres fluides Medium ausgebildet.

Dieses weitere fluide Medium kann von dem ersten fluiden Reaktionsmedium, welchem das erste Strömungsfeld 106 zugeordnet ist, verschieden sein.

Das weitere fluide Medium kann insbesondere ein Kühlmedium zum Kühlen der elektrochemischen Vorrichtung sein. Die zwischen der ersten Bipolarplattenlage 104 und der zweiten Bipolarplattenlage 108 ausgebildeten geschlossenen Fluidkanäle 132 sind in diesem Fall Kühlmediumkanäle 133.

Die von dem weiteren fluiden Medium durchströmbaren geschlossenen Fluidkanäle 132 sind gegenüber der elektrochemisch aktiven Einheit geschlossen ausgebildet, so dass das weitere fluide Medium, insbesondere das Kühlmedium, nicht aus den geschlossenen Fluidkanälen 132 in die elektrochemisch aktive Einheit gelangen kann.

Auch die zweite Bipolarplattenlage 108 weist Stege 112' und zwischen jeweils zwei Stegen 112' liegende Kanalgrundabschnitte 114' auf.

Jeder der Stege 112' weist jeweils eine Kuppe 116' auf, mit welcher der Steg 112' an einer (nicht dargestellten) elektrochemisch aktiven Einheit einer der Bipolarplatte 100 benachbarten weiteren elektrochemischen Einheit der elektrochemischen Vorrichtung anliegt.

Dabei liegt jede Kuppe 116' mit einer Anlagefläche 118', welche im Wesentlichen senkrecht zur Stapelrichtung 102 ausgerichtet ist, im Wesentlichen flächig an einer der Bipolarplatte 100 zugewandten Begrenzungsfläche der elektrochemisch aktiven Einheit der benachbarten elektrochemischen Einheit, welche ebenfalls im Wesentlichen senkrecht zur Stapelrichtung 102 ausgerichtet ist, an.

Ferner umfasst jeder Steg 112' zwei Flanken 120', welche gegenüber der Stapelrichtung 102 um einen spitzen Winkel geneigt sind.

Zwischen den der jeweiligen Kuppe 116' abgewandten äußeren Rändern 122' von zwei einander benachbarten Stegen 112' erstreckt sich jeweils ein Kanalgrundabschnitt 114' der zweiten Bipolarplattenlage 108, welcher die beiden einander benachbarten Stege 112' miteinander verbindet.

Jeder der Stege 112' erstreckt sich längs der Steglängsrichtung 124, welche im Wesentlichen senkrecht zu der Stapelrichtung 102 ausgerichtet ist.

Ein am äußeren Rand der ersten Bipolarplattenlage 104 verlaufender Randsteg 134 und ein demselben gegenüberliegender, längs des Randes der zweiten Bipolarplattenlage 108 verlaufender Randsteg 134' begrenzen gemeinsam einen zwischen den Randstegen 134 und 134' ausgebildeten Randkanal 136 der Bipolarplatte 100.

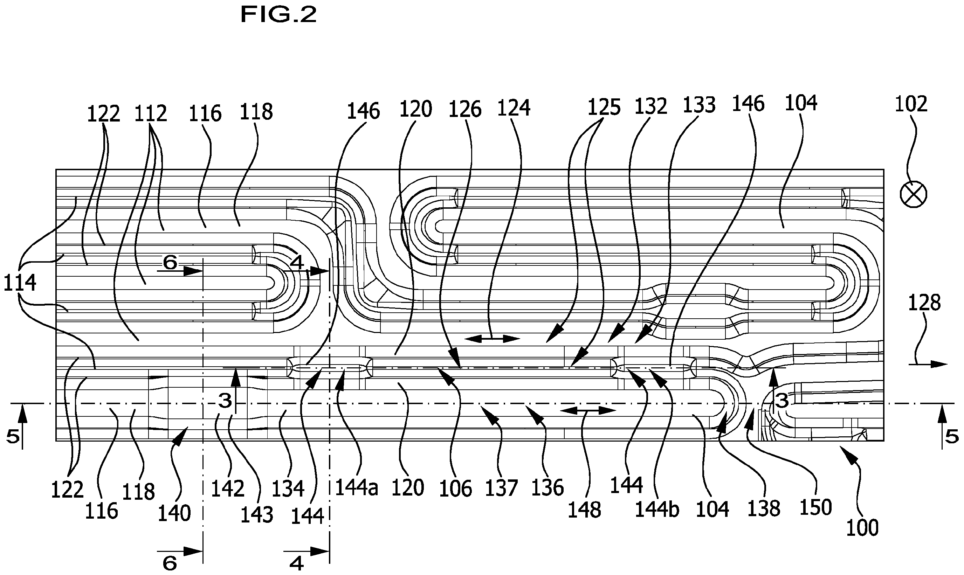

Wie am besten aus den Fig. 1 und 2 zu ersehen ist, umfasst der Randkanal 136 einen Randkanalabschnitt 137, welcher von einem ersten Endbereich 138, an dem Randkanal 136 fluiddicht verschlossen ist, längs der Steglängsrichtung 124 bis zu einem zweiten Endbereich 140 verläuft.

An dem ersten Endbereich 138 ist der Randkanal 136 dadurch verschlossen, dass die Randstege 134 und 134' so weit abgesenkt werden, dass sie einander berühren, um einen Mediumdurchtritt 150 zu bilden, durch welchen das erste fluide Reaktionsmedium und/oder das zweite fluide Reaktionsmedium quer zur Längsrichtung 148 des Randkanals 136 in das jeweils zugeordnete erste Strömungsfeld 106 beziehungsweise zweite Strömungsfeld 110 eintreten kann.

In dem zweiten Endbereich 140 sind im dargestellten Ausführungsbeispiel die Randstege 134 und 134' ebenfalls abgesenkt, so dass eine Verengung 142 im durchströmbaren Querschnitt des Randkanals 136 ausgebildet ist.

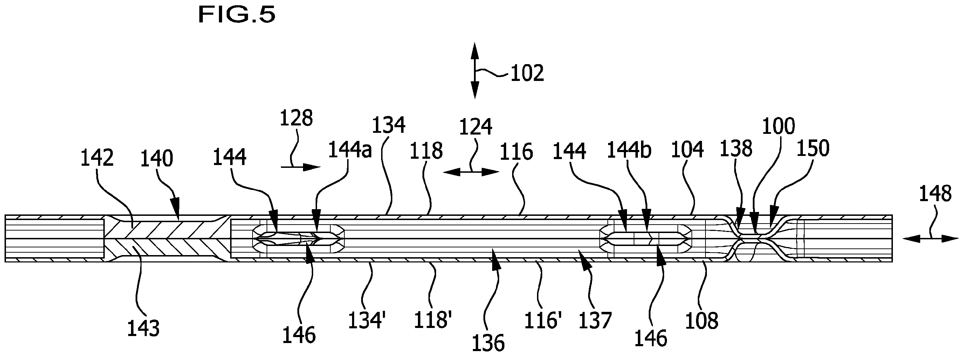

Wie aus dem Längsschnitt von Fig. 5 zu ersehen ist, können die Randstege 134 und 134' im Bereich der Verengung 142, beispielsweise aufgrund einer Materialverdickung, aneinander anliegen, so dass der durchströmbare Querschnitt des Randkanals 136 im Bereich der Verengung 142 bis auf null reduziert wird. In diesem Fall bildet die Verengung 142 eine Unterbrechung 143 des Randkanals 136, und der Randkanal 136 ist nur in dem Randkanalabschnitt 137, zwischen dem ersten Endbereich 138 und dem zweiten Endbereich 140, von dem weiteren fluiden Medium, insbesondere dem Kühlmedium, durchströmbar.

Die Bipolarplatte 100 umfasst ferner eine oder mehrere Fluidverbindungen 144, beispielsweise eine erste Fluidverbindung 144a und eine zweite Fluidverbindung 144b, durch welche der Randkanal 136 an den benachbarten geschlossenen Fluidkanal 132 angeschlossen ist, so dass das weitere fluide Medium, insbesondere das Kühlmedium, aus dem Randkanal 136 in den benachbarten geschlossenen Fluidkanal 132 oder aus dem benachbarten geschlossenen Fluidkanal 132 in den Randkanal 136 strömen kann.

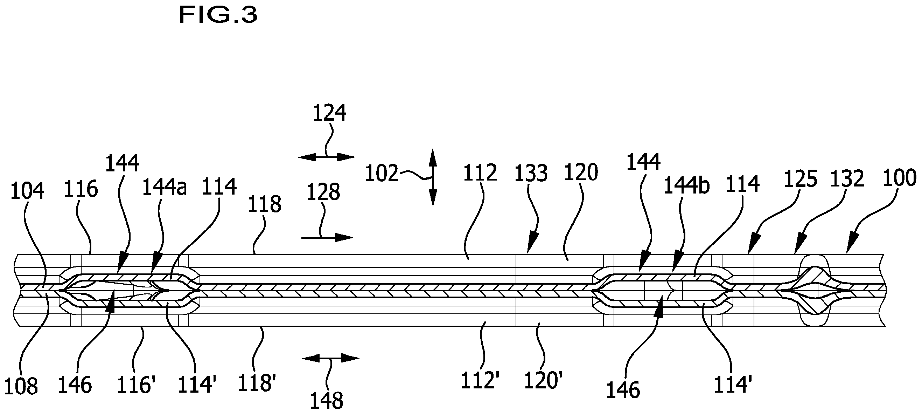

Wie am besten aus dem Längsschnitt von Fig. 3 zu ersehen ist, sind die Fluidverbindungen 144a, 144b dadurch gebildet, dass die Kanalgrundabschnitte 114, 114' der ersten Bipolarplattenlage 104 beziehungsweise der zweiten Bipolarplattenlage 108 im Bereich der Fluidverbindungen 144a und 144b in der Stapelrichtung 102 angehoben sind, so dass in diesen Bereichen die erste Bipolarplattenlage 104 und die zweite Bipolarplattenlage 108 längs der Stapelrichtung 102 voneinander beabstandet sind und zwischen sich einen Verbindungskanal 146 ausbilden, welcher quer, vorzugsweise im Wesentlichen senkrecht, zu der Längsrichtung 148 des Randkanals 136 ausgerichtet ist, welche mit der Steglängsrichtung 124 der Randstege 134 und 134' übereinstimmt.

Durch die Fluidverbindungen 144a und 144b zwischen dem Randkanal 136 und dem benachbarten geschlossenen Fluidkanal 132 kann die Strömung dieses fluiden Mediums in gewünschter Weise zwischen dem Fluidkanal 132 und dem Randkanal 136 aufgeteilt werden, um beispielsweise das weitere Fluid, insbesondere das Kühlmedium, abschnittsweise an Bereichen des ersten Strömungsfelds 106 oder des zweiten Strömungsfelds 110, welche mit elektrochemisch aktiven Bereichen von benachbarten elektrochemisch aktiven Einheiten in Verbindung stehen, vorbeizuführen und an anderen Stellen in definierter Weise in einen benachbarten Fluidkanal einzuspeisen, um an den Einspeisepunkten eine höhere Kühlwirkung zu erzielen.

Die in den Fig. 1 bis 6 dargestellte erste Ausführungsform einer Bipolarplatte 100 ermöglicht es insbesondere, die Strömung des weiteren fluiden Mediums, insbesondere des Kühlmediums, durch die Bipolarplatte 100 in gewünschter Weise zu beeinflussen.

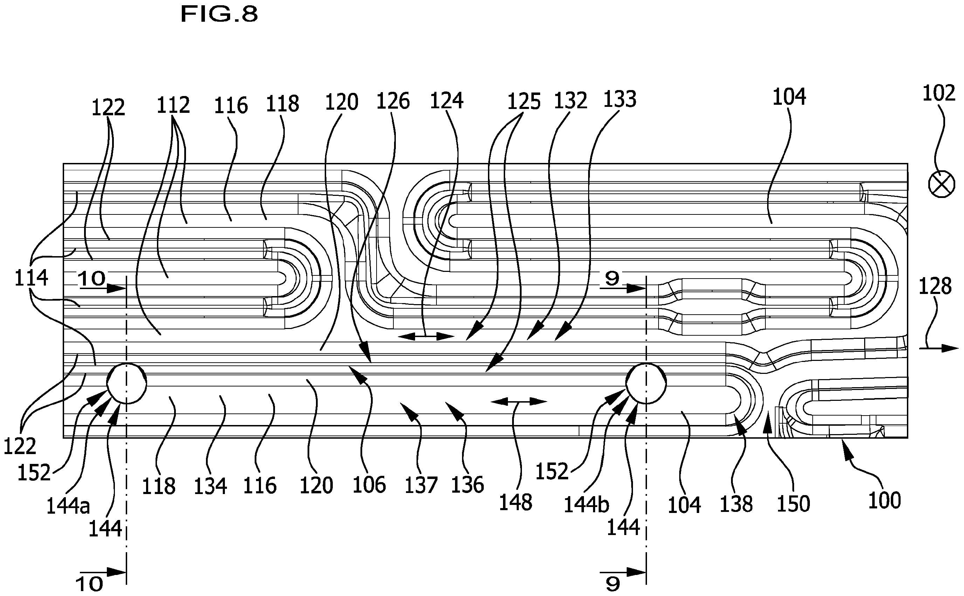

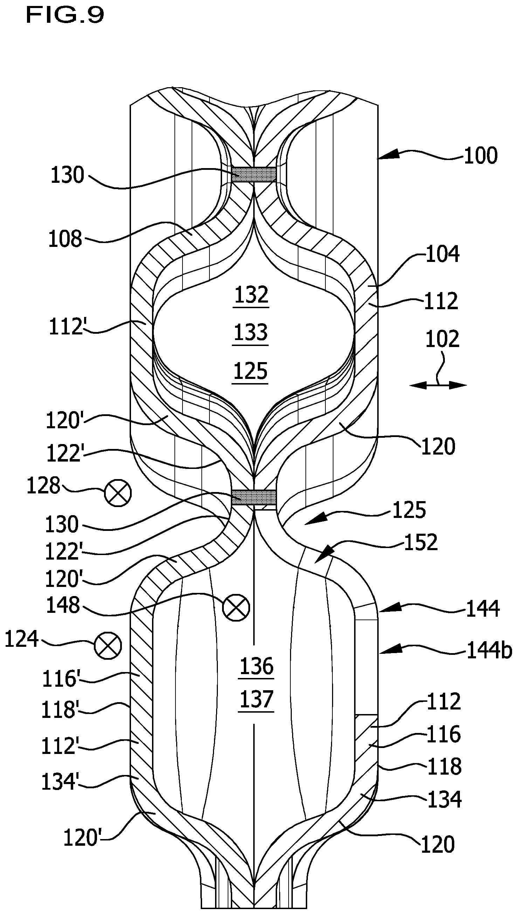

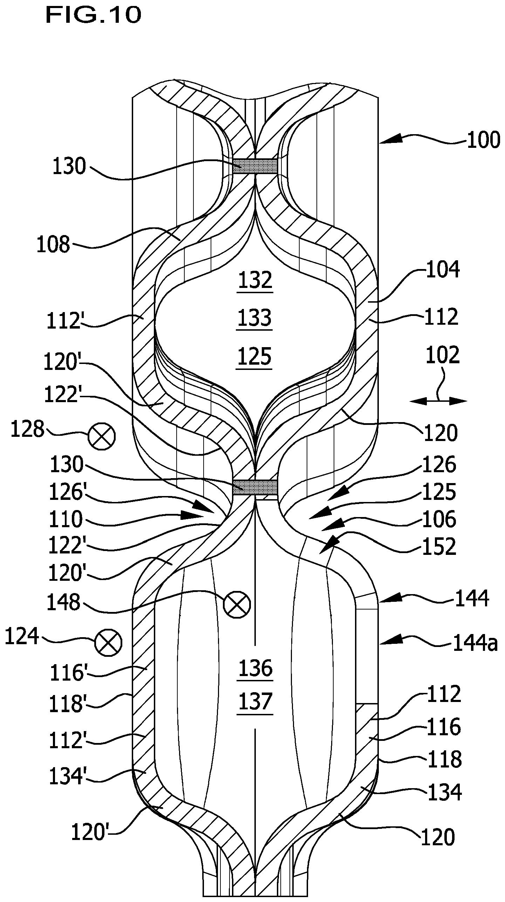

Eine in den Fig. 7 bis 10 dargestellte zweite Ausführungsform der Bipolarplatte 100 unterscheidet sich von der in den Fig. 1 bis 6 dargestellten ersten Ausführungsform dadurch, dass der Randkanal 136 nicht mit einem benachbarten geschlossenen Fluidkanal 132 in Fluidverbindung steht, sondern mit dem benachbarten Strömungsfeldkanal 126, welcher zu der elektrochemisch aktiven Einheit hin offen ist.

Zu diesem Zweck weist der Randkanal 136 bei dieser Ausführungsform eine oder mehrere Fluidverbindungen 144, beispielsweise eine erste Fluidverbindung 144a und eine zweite Fluidverbindung 144b, auf, die als Durchtrittsöffnungen 152 ausgebildet sind, welche beispielsweise an dem Randsteg 134 der ersten Bipolarplattenlage 104 angeordnet sind.

Insbesondere kann vorgesehen sein, dass eine solche Durchtrittsöffnung 152 zumindest teilweise an der Kuppe 116 und/oder zumindest teilweise an einer der Flanken 120 des Randsteges 134 der ersten Bipolarplattenlage 104 angeordnet ist.

Bei dieser Ausführungsform der Bipolarplatte 100 kann somit das erste fluide Reaktionsmedium, welches das erste Strömungsfeld 106 durchströmt, an den Fluidverbindungen 144a und 144b aus dem Strömungsfeldkanal 126, welcher dem Randkanal 136 benachbart ist, in den Randkanal 136 strömen und/oder aus dem Randkanal 136 in den Strömungsfeldkanal 126, welcher dem Randkanal 136 benachbart ist, strömen.

Hierdurch kann der Randkanal 136 zur Beeinflussung der Verteilung des ersten fluiden Reaktionsmediums über das erste Strömungsfeld 106 verwendet werden.

Die Verbindungskanäle 146 zwischen dem Randkanal 136 und dem benachbarten geschlossenen Fluidkanal 132, welcher von dem weiteren fluiden Medium, insbesondere von dem Kühlmedium, durchströmt wird, entfallen bei dieser Ausführungsform.

Die vorstehend im Zusammenhang mit der ersten Ausführungsform beschriebene Verengung 142 oder Unterbrechung 143 des Randkanals 136 kann entfallen oder auch bei dieser zweiten Ausführungsform zur Beeinflussung der Strömung des ersten fluiden Reaktionsmediums durch den Randkanal 136 verwendet werden.

Im Übrigen stimmt die in den Fig. 7 bis 10 dargestellte zweite Ausführungsform einer Bipolarplatte 100 für eine elektrochemische Vorrichtung hinsichtlich Aufbau, Funktion und Herstellungsweise mit der in den Fig. 1 bis 6 dargestellten ersten Ausführungsform überein, auf deren vorstehende Beschreibung insoweit Bezug genommen wird.

## Patentansprüche

1. Bipolarplatte für eine elektrochemische Vorrichtung, umfassend mindestens eine erste Bipolarplattenlage (104) und eine zweite Bipolarplattenlage (108), zwischen denen ein sich längs einer Längsrichtung (148) erstreckender Randkanal (136) ausgebildet ist, und einen im Wesentlichen parallel zu dem Randkanal (136) verlaufenden Fluidkanal (125),
**dadurch gekennzeichnet,**
**dass** die Bipolarplatte (100) mindestens eine Fluidverbindung (144) umfasst, durch welche ein fluides Medium aus dem Randkanal (136) in den benachbarten Fluidkanal (125) und/oder aus dem benachbarten Fluidkanal (125) in den Randkanal (136) strömen kann,
wobei der Randkanal (136) eine Verengung (142) und/oder eine Unterbrechung (143) aufweist, durch welche der im Betrieb der elektrochemischen Vorrichtung durch die Fluidverbindung (144) aus dem Randkanal (136) in den Fluidkanal (125) austretende Anteil des den Randkanal (136) durchströmenden fluiden Mediums vergrößert wird.

2. Bipolarplatte nach Anspruch 1, **dadurch gekennzeichnet, dass** der Fluidkanal (125) gegenüber einer elektrochemisch aktiven Einheit der elektrochemischen Vorrichtung geschlossen ausgebildet ist.

3. Bipolarplatte nach einem der Ansprüche 1 oder 2, **dadurch gekennzeichnet, dass** der Randkanal (136) im Betrieb der elektrochemischen Vorrichtung von einem Kühlmedium durchströmbar ist.

4. Bipolarplatte nach einem der Ansprüche 1 bis 3, **dadurch gekennzeichnet, dass** die Fluidverbindung (144) einen Verbindungskanal (146) umfasst, der durch die erste Bipolarplattenlage (104) und die zweite Bipolarplattenlage (108) begrenzt ist, wobei die erste Bipolarplattenlage (104) und die zweite Bipolarplattenlage (108) im Bereich des Verbindungskanals (146) längs einer Stapelrichtung (102) der elektrochemischen Vorrichtung voneinander beabstandet sind.

5. Bipolarplatte nach Anspruch 4, **dadurch gekennzeichnet, dass** der Verbindungskanal (146) quer zu der Längsrichtung (148) des Randkanals (136) verläuft.

6. Bipolarplatte nach Anspruch 1, **dadurch gekennzeichnet, dass** der Fluidkanal (125) gegenüber einer elektrochemisch aktiven Einheit der elektrochemischen Vorrichtung offen ausgebildet ist.

7. Bipolarplatte nach Anspruch 6, **dadurch gekennzeichnet, dass** der Randkanal (136) im Betrieb der elektrochemischen Vorrichtung von einem fluiden Reaktionsmedium durchströmbar ist.

8. Bipolarplatte nach einem der Ansprüche 1 bis 7, **dadurch gekennzeichnet, dass** die Fluidverbindung (144) mindestens eine Durchtrittsöffnung (152) umfasst, die in einer Begrenzungswand des Randkanals (136) angeordnet ist.

9. Bipolarplatte nach Anspruch 8, **dadurch gekennzeichnet, dass** die Durchtrittsöffnung (152) zumindest teilweise an einer Kuppe (116) und/oder zumindest teilweise an einer Flanke (120) eines Randsteges (134) der ersten Bipolarplattenlage (104) oder der zweiten Bipolarplattenlage (108) angeordnet ist.

10. Elektrochemische Vorrichtung, umfassend mindestens eine Bipolarplatte (100) nach einem der Ansprüche 1 bis 9 und mindestens eine elektrochemisch aktive Einheit, welche mit der Bipolarplatte (100) in Kontakt steht.

## Claims

1. Bipolar plate for an electrochemical device, comprising at least one first bipolar plate layer (104) and one second bipolar plate layer (108), between which an edge channel (136) extending along a longitudinal direction (148) is formed, and comprising a fluid channel (125) running substantially in parallel to the edge channel (136),
**characterized in that**
the bipolar plate (100) comprises at least one fluidic connection (144) through which a fluid medium can flow from the edge channel (136) into the adjacent fluid channel (125) and/or from the adjacent fluid channel (125) into the edge channel (136),
wherein the edge channel (136) has a constriction (142) and/or an interruption (143) by which the portion of the fluid medium flowing through the edge channel (136) exiting through the fluidic connection (144) from the edge channel (136) into the fluid channel (125) in the operation of the electrochemical device is increased.

2. Bipolar plate in accordance with Claim 1, **characterized in that** the fluid channel (125) is of closed configuration relative to an electrochemically active unit of the electrochemical device.

3. Bipolar plate in accordance with either of Claims 1 or 2, **characterized in that** the edge channel (136) can be flowed through by a cooling medium in the operation of the electrochemical device.

4. Bipolar plate in accordance with any one of Claims 1 to 3, **characterized in that** the fluidic connection (144) comprises a connecting channel (146), which is delimited by the first bipolar plate layer (104) and the second bipolar plate layer (108), wherein the first bipolar plate layer (104) and the second bipolar plate layer (108) in the region of the connecting channel (146) are spaced at a distance from one another along a stack direction (102) of the electrochemical device.

5. Bipolar plate in accordance with Claim 4, **characterized in that** the connecting channel (146) runs transversely to the longitudinal direction (148) of the edge channel (136).

6. Bipolar plate in accordance with Claim 1, **characterized in that** the fluid channel (125) is of open configuration relative to an electrochemically active unit of the electrochemical device.

7. Bipolar plate in accordance with Claim 6, **characterized in that** the edge channel (136) can be flowed through by a fluid reaction medium in the operation of the electrochemical device.

8. Bipolar plate in accordance with any one of Claims 1 to 7, **characterized in that** the fluidic connection (144) comprises at least one through-opening (152), which is arranged in a delimiting wall of the edge channel (136).

9. Bipolar plate in accordance with Claim 8, **characterized in that** the through-opening (152) is arranged at least partially on a crest (116) and/or at least partially on a flank (120) of an edge web (134) of the first bipolar plate layer (104) or the second bipolar plate layer (108).

10. Electrochemical device, comprising at least one bipolar plate (100) in accordance with any one of Claims 1 to 9 and at least one electrochemically active unit, which is in contact with the bipolar plate (100).

## Revendications

1. Plaque bipolaire pour un dispositif électrochimique, comprenant au moins une première couche de plaque bipolaire (104) et une seconde couche de plaque bipolaire (108), entre lesquelles est formé un canal périphérique (136) s'étendant dans une direction longitudinale (148), et un canal de fluide (125) s'étendant sensiblement parallèlement au canal périphérique (136),
**caractérisée en ce que**
la plaque bipolaire (100) comprend au moins une liaison fluidique (144) via laquelle un milieu fluide peut s'écouler du canal périphérique (136) dans le canal de fluide (125) adjacent et/ou du canal de fluide (125) adjacent dans le canal périphérique (136),
le canal périphérique (136) présentant un rétrécissement (142) et/ou une interruption (143) qui a/ont pour effet d'augmenter la part du milieu fluide traversant le canal périphérique (136) qui sort du canal périphérique (136) dans le canal de fluide (125) via la liaison fluidique (144) pendant le fonctionnement du dispositif électrochimique.

2. Plaque bipolaire selon la revendication 1, **caractérisée en ce que** le canal de fluide (125) est réalisé fermé par rapport à une unité électrochimiquement active du dispositif électrochimique.

3. Plaque bipolaire selon l'une des revendications 1 ou 2, **caractérisée en ce que** le canal périphérique (136) peut être traversé par un fluide de refroidissement pendant le fonctionnement du dispositif électrochimique.

4. Plaque bipolaire selon l'une des revendications 1 à 3, **caractérisée en ce que** la liaison fluidique (144) comprend un canal de liaison (146) délimité par la première couche de plaque bipolaire (104) et la seconde couche de plaque bipolaire (108), la première couche de plaque bipolaire (104) et la seconde couche de plaque bipolaire (108) étant espacées l'une de l'autre au niveau du canal de liaison (146) dans une direction d'empilement (102) du dispositif électrochimique.

5. Plaque bipolaire selon la revendication 4, **caractérisée en ce que** le canal de liaison (146) s'étend transversalement à la direction longitudinale (148) du canal périphérique (136).

6. Plaque bipolaire selon la revendication 1, **caractérisée en ce que** le canal de fluide (125) est réalisé ouvert par rapport à une unité électrochimiquement active du dispositif électrochimique.

7. Plaque bipolaire selon la revendication 6, **caractérisée en ce que** le canal périphérique (136) peut être traversé par un milieu réactionnel fluide pendant le fonctionnement du dispositif électrochimique.

8. Plaque bipolaire selon l'une des revendications 1 à 7, **caractérisée en ce que** la liaison fluidique (144) comprend au moins un orifice de passage (152) disposé dans une paroi de délimitation du canal périphérique (136).

9. Plaque bipolaire selon la revendication 8, **caractérisée en ce que** l'orifice de passage (152) est disposé au moins partiellement sur un sommet (116) et/ou au moins partiellement sur un flanc (120) d'une nervure de bord (134) de la première couche de plaque bipolaire (104) ou de la seconde couche de plaque bipolaire (108).

10. Dispositif électrochimique comprenant au moins une plaque bipolaire (100) selon l'une des revendications 1 à 9 et au moins une unité électrochimiquement active qui est en contact avec la plaque bipolaire (100).
